# EUROPÄISCHE PATENTSCHRIFT

(11) **EP 3 317 192 B1**
(45) Veröffentlichungstag und Bekanntmachung des Hinweises auf die Patenterteilung: **08.01.2020**
(21) Anmeldenummer: 16719042.0
(22) Anmeldetag: 13.04.2016
(51) Int. Cl.: B65C 9/22

(54) **LEIMWALZE MIT BEGRENZTEM BELEIMUNGSBEREICH**
GLUE ROLLER WITH LIMITED GLUEING AREA
ROULEAU D'ENCOLLAGE AVEC ZONE DE COLLAGE LIMITÉ

(30) Priorität: 30.06.2015 DE 102015212141
(43) Veröffentlichungstag der Anmeldung: 09.05.2018
(73) Patentinhaber: Krones AG, 93073 Neutraubling (DE)
(72) Erfinder: KRONSEDER, Volker, 93073 Neutraubling (DE)
(74) Vertreter: Grünecker Patent- und Rechtsanwälte PartG mbB
(86) Internationale Anmeldenummer: PCT/EP2016/058052
(87) Internationale Veröffentlichungsnummer: WO 2017/001075

(56) Entgegenhaltungen:
- DE-A1-102010 000 182
- US-A- 3 006 317
- US-A- 4 347 095
- US-A- 4 693 210
- US-A- 5 160 570

## Beschreibung

### Gebiet der Erfindung

Die vorliegende Erfindung betrifft eine Vorrichtung und ein Verfahren zum gezielten Auftragen von Leim auf Etiketten in einer Etikettiervorrichtung für Behälter, insbesondere für Dosen, Glasflaschen, PET-Flaschen oder dergleichen.

### Stand der Technik

Etikettiermaschinen werden in der Getränke verarbeitenden Industrie verwendet, um kontinuierlich mit hoher Leistung Etiketten auf fortlaufend zugeführte Artikel bzw. Behälter aufzubringen. Die Behälter können dabei Dosen, Glasflaschen, Kunststoffflaschen oder dergleichen sein. Neben selbstklebenden Etiketten sind auch solche Etiketten bekannt, auf welche zunächst Leim aufgetragen wird, um die mit Leim versehenen Etiketten anschließend an den Behältern anzubringen. Ein geeigneter Leim wird beispielsweise über eine Beleimungseinrichtung mit einer Leimwalze auf die Rückseiten der Etiketten aufgetragen. Dies kann direkt geschehen, indem der Leim mittels der Leimwalze auf die mittels eines Vakuumzylinders an der Leimwalze vorbeigeführten Etiketten aufgebracht wird. Es kann jedoch auch indirekt geschehen, indem der Leim mittels der Leimwalze zunächst auf die gekrümmten Haftflächen von oszillierend oder rotierend an der Leimwalze vorbeibewegten Entnahmeelementen, sogenannte Paletten, übertragen wird, die ihrerseits die Etiketten einzeln von einem Etikettenstapel abnehmen, wobei die Etiketten bei der Abnahme auf der Rückseite mit dem zuvor übertragenen Leim versehen werden. Die nunmehr beleimten Etiketten werden anschließend an einen rotierenden Greiferzylinder oder dergleichen übergeben, von wo aus sie auf die Behälter übertragen werden.

Eine entsprechende Etikettiervorrichtung gemäß dem Oberbegriff des Anspruchs 1 wird in der US4693210 offenbart.

In beiden Fällen muss der benötigte Leim zunächst von einem Vorratsbehälter für Leim auf die Leimwalze übertragen werden. Dazu wird der Leim üblicherweise mittels einer Pumpe von dem Vorratsbehälter zu einer Leimauftrageeinheit gepumpt und über die gesamte axiale Ausdehnung der Leimwalze auf diese aufgetragen. Beispielsweise beschreibt die DE 3022040 A1 eine Leimwalze, der ein Leimauftragungselement und ein anstellbarer Leimschaber zugeordnet sind. Dabei wird der aus dem Vorratsbehälter abgepumpte Leim mittels des Leimschabers auf die Leimwalze aufgetragen. In der Regel ist der Leimschaber schwenkbar ausgestaltet und liegt tangential an der Leimwalze in Axialrichtung der Leimwalze an. Die Positionierung des Leimschabers an der Leimwalze ist dabei für ein optimales Etikettierergebnis von großer Bedeutung. Beim Auftragen des Leims auf die Leimwalze bildet sich eine sogenannte Leimschnur, die sich über die gesamte Höhe der Leimwalze erstreckt.

Problematisch ist bei dieser Ausführung, dass bei einem Betriebsstopp der Etikettiermaschine die an der Leimwalze verbleibende Leimschnur antrocknen und manchmal nur schwer entfernt werden kann. Weiterhin besteht bei einem solchen System die Gefahr, dass der Leim durch Kontakt mit der Umgebungsluft, insbesondere durch Kontakt mit dem atmosphärischen Sauerstoff, seine chemische Struktur und/oder Zusammensetzung verändert. Zudem erstreckt sich die Leimschnur bei den bekannten Systemen über die gesamte Höhe, d. h. Ausdehnung der Leimwalze in Axialrichtung, sodass der aufgetragene Leim nicht vollflächig von dem im Allgemeinen kleineren Etikett bzw. der Palette übernommen wird. Der nicht übernommene Leim kann wiederum an der Leimwalze antrocknen oder seine Eigenschaften verändern.

Der vorliegenden Erfindung liegt somit die Aufgabe zugrunde, eine Beleimungseinrichtung für eine Etikettiervorrichtung bereitzustellen, in der Leim vorteilhaft nur in der Menge aufgebracht wird, die tatsächlich benötigt wird. Darüber hinaus ist es eine Aufgabe der vorliegenden Erfindung, dass unterschiedliche Betriebszustände der Etikettiervorrichtung, wie beispielsweise ein Etikettiermodus, ein Ruhemodus, ein Reinigungsmodus, usw., besonders einfach und vorteilhaft eingestellt werden können. Ganz allgemein liegt der vorliegenden Erfindung die Aufgabe zugrunde, den Leimverbrauch der Etikettiervorrichtung zu reduzieren und deren Standzeiten zu verlängern.

### Beschreibung der Erfindung

Die oben genannten Aufgaben werden gelöst durch eine Etikettiervorrichtung zum Aufbringen von Etiketten auf Behälter gemäß Anspruch 1, umfassend eine Beleimungseinrichtung mit einer Leimwalze und einer der Leimwalze zugeordneten Leimauftrageeinheit zum Auftragen von Leim auf die Leimwalze, wobei die Leimauftrageeinheit wenigstens einen Aufnahmeraum zur Aufnahme des Leims aufweist, und wobei die Leimwalze und/oder die Leimauftrageeinheit derart ausgebildet und zueinander angeordnet sind, dass in dem Aufnahmeraum befindlicher Leim nur in einem oder mehreren Teilbereichen der in Axialrichtung der Leimwalze gesehenen Gesamtausdehnung der Oberfläche der Leimwalze auf die Oberfläche der Leimwalze aufgetragen wird.

Bei der Etikettiervorrichtung zum Aufbringen von Etiketten auf Behälter kann es sich prinzipiell um eine beliebige, im Stand der Technik bekannte Etikettiervorrichtung handeln, welche eine Leimwalze besitzt, um den Leim auf die zu applizierenden Etiketten wie oben beschrieben direkt oder indirekt aufzubringen. Wie erwähnt kann es sich bei den Behältern um Dosen, Glasflaschen, Kunststoffflaschen, insbesondere PET-Flaschen, oder dergleichen handeln. Zu der Etikettiervorrichtung können insbesondere ein oder mehrere der bekannten Elemente wie eine Behälterzufuhr, ein Behältertisch, eine Behälterabfuhr, eine Einteilschnecke, ein Etikettieraggregat mit einer oder zwei Etikettenbandrollen, Etikettenzuführung, Schneideinrichtung, Vakuumwalze und Vakuum- bzw. Greiferzylinder, oder ein Etikettieraggregat mit einem Etikettenkasten, Palettenkarussell bzw. Entnahmeelementträger, entsprechenden Paletten bzw. Entnahmeelementen, inklusive eventuell benötigter Steuerkurve, und Greiferzylinder, oder dergleichen gehören. Die genannten Elemente sind im Stand der Technik wohlbekannt und werden daher hier nicht im Detail beschrieben. Beispielhafte Ausführungsformen solcher Etikettiervorrichtungen werden darüber hinaus im Zusammenhang mit den Figuren genauer beschrieben.

Die Etikettiervorrichtung kann zudem als Teil eines Maschinenblocks zusammen mit weiteren Komponenten wie z. B. einer Füllmaschine zum Füllen der Behälter, vorgesehen sein. Unter einem Maschinenblock ist im Sinne der vorliegenden Erfindung zu verstehen, dass wenigstens die vom Maschinenblock umfassten Maschinen zum Füllen, Verschließen und Etikettieren auf einem gemeinsamen Maschinengestell befestigt sind und/oder dass deren Maschinengestelle für den Produktionsbetrieb mechanisch ortsfest miteinander verbindbar sind, beispielsweise durch Verschrauben, Festklemmen oder dergleichen. Die Maschinengestelle können aus mehreren fest miteinander verbindbaren Modulen, Montageplattformen oder dergleichen für einzelne Maschinen, Behandlungseinheiten und/oder Transfersterne des Maschinenblocks zusammengesetzt sein.

Entsprechend ist eine Behälterübergabe zwischen den einzelnen Maschinen des Maschinenblocks auf platzsparende und präzise Weise mittels Transfersternen, wie beispielsweise Einlaufsternen und Auslaufsternen, Förderschnecken oder dergleichen möglich.

Vorzugsweise kann der Maschinenblock ferner eine stromaufwärts der Füllmaschine ausgebildete Streckblasmaschine zur Herstellung von Behältern aus einem Kunststoff, insbesondere aus PET, umfassen. Dies ermöglicht eine besonders kompakte Bauform und reduziert die Gefahr einer Verschmutzung der Behälter auf dem Weg zur Füllmaschine und die daran anschließenden Maschinen des Maschinenblocks.

Vorzugsweise kann der Maschinenblock stromaufwärts der Füllmaschine eine Inspektionseinheit und/oder einen Rinser für Behälter aus Glas umfassen. Dies ermöglicht eine besonders kompakte Bauform und reduziert Fehler beim Transport und/oder durch Verschmutzung der Behälter zwischen der Inspektionseinheit, dem Rinser und der Füllmaschine. Vorzugsweise können die Füllmaschine, die Verschließmaschine und die Etikettiermaschine als Rundläufermaschinen mit kontinuierlichem Behältertransport ausgebildet sein, insbesondere in dieser Reihenfolge. Dies ermöglicht hohe Maschinenleistungen des Maschinenblocks.

Vorzugsweise können die Füllmaschine, die Verschließmaschine und die Etikettiermaschine durch Transfersterne, wie beispielsweise Einlaufsterne, Auslaufsterne, Transportsterne oder dergleichen, fördertechnisch direkt aneinander gekoppelt werden. Zwischen Auslaufsternen und Einlaufsternen können außerdem Einteilschnecken oder dergleichen vorhanden sein. Vorzugsweise können zusätzliche Maschinen des Maschinenblocks, wie beispielsweise die Streckblasmaschine, auf die gleiche Weise fördertechnisch angekoppelt werden.

Die Etikettiervorrichtung kann derart modular aufgebaut sein, dass sie sich auch für die Etikettierung mit blattförmigen Etiketten eignet. Vorteilhaft ist eine modular ausgeführte Etikettiervorrichtung. Dabei kann die Etikettiervorrichtung austauschbar und mittels Rollen fahrbar an der Maschinen-Peripherie, insbesondere am Maschinen-Karussell an einer höhenverstellbaren, bodengestützten, nicht bodengestützten und/oder freistehenden Aggregataufnahme angedockt werden.

Erfindungsgemäß weist die Beleimungseinrichtung eine Leimwalze auf, die wie an sich bekannt rotierend angetrieben wird und dabei Leim von einer der Leimwalze zugeordneten Leimauftrageeinheit aufnimmt, welcher anschließend entweder unmittelbar an die Etiketten oder zunächst an die Paletten eines Palettenkarussells weitergegeben wird. Zu diesem Zweck ist die Leimauftrageeinheit an einer den Etiketten bzw. Paletten im Umlauf der Leimwalze vorgeordneten Stelle des Umfangs der Leimwalze angeordnet. Die Leimwalze besitzt eine zylindrische Mantelfläche, welche um eine entlang der Längsachse der Leimwalze angeordnete Rotationsachse rotiert wird. Die Rotation der Leimwalze kann dabei mittels eines steuer- und/oder regelbaren Antriebs, beispielsweise in Form eines regelbaren Elektromotors, erfolgen. In Axialrichtung der Leimwalze gesehen gibt es somit eine maximale Ausdehnung der Oberfläche, d. h. der Mantelfläche, der Leimwalze, die mit Leim versehen werden kann. Dies entspricht im Allgemeinen der Höhe des zylindrischen Teils der Leimwalze. Die Begriffe "Oberfläche" und "Mantelfläche" werden hier und im Folgenden bewusst getrennt verwendet, da wie weiter unten beschrieben geringfügige Abweichungen der Oberfläche der Leimwalze von der streng zylindrischen Mantelfläche der Leimwalze vorgesehen werden können, um die Leimaufnahme auf wohldefinierte Teilbereiche zu beschränken.

Gemäß der vorliegenden Erfindung weist die Leimauftrageeinheit einen oder mehrere Aufnahmeräume in Form von Hohlkammern zur Aufnahme von Leim auf, wie es beispielsweise bei dem weiter unten beschriebenen Hohlkammerleimschaber der Fall ist. Dabei wird dem oder den Aufnahmeräumen Leim aus einem Leimvorratsbehälter mittels einer oder mehrerer Transportleitungen für den Leim zugeführt, sodass Leim von dem oder den, im Betrieb walzenseitig offenen, Aufnahmeräumen an die Oberfläche der Leimwalze abgegeben werden kann. Der Leim kann beispielsweise mittels einer Leimpumpe aus dem Leimvorratsbehälter entnommen und durch die Transportleitung zu dem oder den Aufnahmeräumen gepumpt werden. Diese Leimzufuhr kann insbesondere gesteuert und/oder geregelt in Abhängigkeit von der benötigten Leimmenge erfolgen, indem beispielsweise eine regelbare Leimpumpe vorgesehen wird.

Erfindungsgemäß sind die Leimwalze und/oder die Leimauftrageeinheit derart ausgebildet und zueinander angeordnet, dass in dem wenigstens einen Aufnahmeraum befindlicher Leim nur in einem oder mehreren Teilbereichen der axialen Ausdehnung der Mantelfläche auf die Oberfläche der Leimwalze aufgetragen wird bzw. keinen Leim aufnimmt. Dies bedeutet, dass ein Teil der axialen Ausdehnung der Mantelfläche nicht mit Leim versehen wird. Insbesondere geht dieser Teil über den Teil hinaus, welcher konstruktionsbedingt, beispielsweise bedingt durch die Dicke von den Aufnahmeraum begrenzenden Dichtungseinrichtungen, wie sie weiter unten beschrieben werden, generell nicht mit Leim versehen werden kann. Die axiale Ausdehnung der mit Leim versehenen Teilbereiche ist somit explizit kleiner als die axiale Ausdehnung der maximal mit Leim versehbaren Mantelfläche der Leimwalze. Insbesondere kann die (summierte) axiale Ausdehnung des oder der mit Leim versehbaren Teilbereiche kleiner oder gleich 90%, bevorzugt kleiner oder gleich 80%, noch bevorzugter kleiner oder gleich 70% der Höhe der Mantelfläche betragen.

Das Auftragen von Leim nur in einem oder mehreren Teilbereichen in Bezug auf die axiale Ausdehnung der Oberfläche der Leimwalze kann durch geeignetes Ausbilden der Leimwalze, beispielsweise durch die im Anschluss beschriebenen Kontaktsegmente, und/oder der Leimauftrageeinheit, beispielsweise durch die weiter unten beschriebenen räumlich getrennten Aufnahmeräume oder einen steuerbaren Schieber mit zwei oder mehr Segmenten, realisiert werden. Dabei ist es denkbar, dass entweder die Leimwalze oder die Leimauftrageeinheit aufgrund ihrer speziellen Ausbildung den Leimauftrag auf den oder die Teilbereiche begrenzt, während das jeweils andere Element einen größeren Leimauftrag, bzgl. seiner Ausdehnung in Axialrichtung, gestatten würde. Dadurch können durch Anpassung der Ausbildung, beispielsweise durch Austausch, durch spezielle Ansteuerung oder Anpassung der relativen Anordnung von Leimwalze und Leimauftrageeinheit, der oder die Teilbereiche verändert, verschoben oder neu definiert werden, wie es unten genauer erläutert wird. Andererseits können die Leimwalze und die Leimauftrageeinheit auch zueinander passend in dem Sinne ausgebildet sein, dass die durch ihre Ausbildungen definierten Teilbereiche einander entsprechen. Es versteht sich, dass die Leimwalze und die Leimauftrageeinheit derart zueinander angeordnet sind, dass der Leimauftrag mittels der Leimauftrageeinheit in dem oder den Teilbereichen der Oberfläche der Leimwalze erfolgen kann. Beispielsweise sind der oder die Aufnahmeräume der Leimauftrageeinheit im Etikettiermodus derart entlang der Axialrichtung der Leimwalze tangential ausgerichtet, dass sie sich über den axialen Bereich des oder der zu beleimenden Teilbereiche der Oberfläche der Leimwalze erstrecken. Der Abstand der Leimauftrageeinheit von der Oberfläche der Leimwalze wird im Etikettiermodus, beispielsweise durch Anstellen der Leimauftrageeinheit an die Oberfläche mittels eines Pneumatikzylinders, derart eingestellt, dass in dem oder den Aufnahmeräumen befindlicher Leim zuverlässig auf die Oberfläche der Leimwalze aufgetragen wird.

Bei dem Leim kann es sich um Heißleim, UV-Leim oder Kaltleim handeln. Besonders vorteilhaft kann die erfindungsgemäße Vorrichtung zum Aufbringen von Kaltleimen, insbesondere dickflüssigen Kaltleimen, wie beispielsweise Kaseinleim oder Dextrinleim, eingesetzt werden. Alternativ kann die Vorrichtung aber auch zum Auftragen von Dispersionsleim verwendet werden. Die erfindungsgemäße Vorrichtung kann sowohl für dünnflüssigen Leim, Leim mit einer Viskosität zwischen 600 und 80000 mPa s als auch Kasein- oder Dispersionsleim mit einer optimalen Verarbeitungstemperatur von 18 °C bis 34 °C verwendet werden.

Gemäß einer Weiterbildung kann die Leimwalze mindestens ein dem einen oder mehreren Teilbereichen in Axialrichtung entsprechendes Kontaktsegment aufweisen, das derart ausgebildet ist, dass es bei Kontakt mit der Leimauftrageeinheit Leim in einer oder mehreren gegenüber der Mantelfläche der Leimwalze radial zurückfallenden Vertiefungen aufnimmt. Der Begriff "radial" bezieht sich hier und im Folgenden auf den Radius der zylindrischen Mantelfläche der Leimwalze. Gemäß dieser Weiterbildung sind in der Oberfläche der Leimwalze segmentweise Vertiefungen ausgebildet, die gegenüber dem Radius der Mantelfläche einen kleineren Abstand von der Drehachse der Leimwalze besitzen. In den so ausgebildeten Kontaktsegmenten kann sich der von der Leimauftrageinheit abgegebene Leim somit bevorzugt sammeln, wodurch der oder die zuvor beschriebenen Teilbereiche definiert werden können. Die Vertiefungen können beispielsweise eine Tiefe, d. h. eine radiale Abweichung vom Radius der Mantelfläche, zwischen 0,02 und 0,08 mm, bevorzugt zwischen 0,03 und 0,05 mm besitzen. Dabei können die Vertiefungen homogen mit einer glatten Grundfläche oder aber wie unten genauer beschrieben strukturiert ausgebildet sein.

Der Begriff "Kontaktsegment" bezeichnet hier und im Folgenden einen in axialer Richtung begrenzten Teil der Oberfläche der Leimwalze in beliebiger Form. Dabei sind auch Kontaktsegmente denkbar, die von der rechteckigen Form üblicher Etiketten abweichen, sodass im Prinzip beliebige, mit der Ausdehnung der Oberfläche der Leimwalze vereinbare Etikettenformen und -größen denkbar sind. Das Kontaktsegment ist jedoch so zu verstehen, dass es ein zusammenhängendes Gebiet der Oberfläche definiert, dessen maximale Ausdehnung in axialer Richtung wie oben beschrieben kleiner als die Höhe der Mantelfläche der Leimwalze ist. Dabei muss das Kontaktsegment nicht zwingend die Ausdehnung der zu beleimenden Etiketten besitzen. Beispielsweise kann eine Beleimung des Anfangs- und Endbereichs von Etiketten mittels zweier in Umfangsrichtung der Leimwalze voneinander getrennt ausgebildeter Kontaktsegmente erheblich geringerer Größe als das Etikett realisiert werden. Die Leimwalze kann zudem zwei oder mehr in Axialrichtung voneinander getrennt angeordnete Kontaktsegmente aufweisen, welche beispielsweise zur Beleimung von Rumpf- und Brustetiketten, auch gleichzeitig, verwendet werden können. Der Anzahl und Form der Kontaktsegmente sind lediglich durch die Ausdehnung der Oberfläche der Leimwalze und die oben genannten Bedingungen, insbesondere die beschränkte Ausdehnung in Axialrichtung der Leimwalze Grenzen gesetzt. Entscheidend ist, dass das oder die Kontaktsegmente in Axialrichtung lokalisierte Teilbereiche der Leimwalze definieren, in denen gezielt und ausschließlich Leim aufgetragen werden soll. Dadurch kann einerseits bewerkstelligt werden, dass Leim nur dort aufgetragen wird, wo er, abhängig von Etikettengrößen, Etikettenform und/oder Beleimungsbereichen, auch benötigt wird, was zu einem reduzierten Leimverbrauch führt. Andererseits kann verhindert werden, dass der aufgetragene Leim unnötig in Kontakt mit der Umgebungsluft kommt, was zur Veränderung der chemischen Eigenschaften des Leims führen könnte. Darüber hinaus wird kein überschüssiger Leim auf die Leimwalze aufgetragen, der nicht von den Etiketten abgenommen würde und somit an der Leimwalze herunterliefe. Als Konsequenz kann auf das sonst übliche Auffangen des an der Leimwalze herunterlaufenden Leims und dessen Zurückführen in den Kreislauf verzichtet werden.

Gemäß einer speziellen Weiterbildung kann das mindestens eine Kontaktsegment derart ausgebildet sein, dass es sich nur über einen Teil des Umfangs der Mantelfläche der Leimwalze erstreckt. Zusätzlich zu der Begrenzung des Kontaktsegments in axialer Richtung ist das Kontaktsegment somit auch in Umfangsrichtung begrenzt. Insbesondere kann die Länge des Kontaktsegments in Umfangsrichtung passend zur Länge der zu beleimenden Etiketten gewählt werden. Auch ist es denkbar, mehrere gleich geformte oder verschieden geformte, in Umfangsrichtung voneinander abgesetzte Kontaktsegmente entlang des Umfangs der Mantelfläche vorzusehen, um beispielsweise eine Anfangs- und Endbeleimung von Etiketten zu realisieren.

Bei einer weiteren Weiterbildung weist die Oberfläche der Leimwalze wenigstens in Teilen der Oberfläche außerhalb der Kontaktsegmente eine glatte Oberfläche auf. Beispielsweise kann die Oberfläche der Leimwalze zwischen den Kontaktsegmenten glatt ausgebildet sein. Insbesondere kann die gesamte Oberfläche der Leimwalze im Bereich der Mantelfläche außerhalb des mindestens einen Kontaktsegments glatt und mit dem Radius der Mantelfläche ausgebildet sein. Auf diese Weise ist es möglich, im Betrieb nur die durch die Kontaktsegmente definierten Teilbereiche mit Leim zu beaufschlagen und die übrigen Bereiche im Wesentlichen frei von Leim zu halten. Beispielsweise kann auf die glatt ausgebildeten Bereiche aufgetragener Leim durch in Kontakt mit der Oberfläche der Leimwalze gebrachte Elemente der Leimauftrageeinheit, wie sie unten genauer beschrieben werden, abgezogen werden, sodass kein Leim auf den glatt ausgebildeten Bereichen verbleibt.

Gemäß einer Weiterbildung können die eine oder mehreren Vertiefungen als in die Oberfläche eingravierte oder gefräste Vertiefungen, als Zwischenräume einer Struktur der Oberfläche in Form eines Gitters, eines Lochbleches oder eines Gewebes, oder einer Kombination davon ausgebildet sein. Im Bereich der Kontaktsegmente kann die Oberfläche der Leimwalze somit eine Struktur aufweisen, die aus einer Vielzahl von sich abwechselnden Vertiefungen und Erhebungen besteht. Dabei liegen die Oberkanten der Erhebungen auf der Mantelfläche, während die Vertiefungen wie oben beschrieben zwischen 0,02 und 0,08 mm, bevorzugt zwischen 0,03 und 0,05 mm darunter liegen. Vertiefungen und Erhebungen können dabei im Prinzip jedes beliebige Muster bilden, welches sich beispielsweise mittels Lasergravur und/oder Fräsen erzeugen lässt. Insbesondere sind Kontaktsegmente in Form eines Gitters, eines Lochblechs oder eines Gewebes denkbar. Die Größe der Vertiefungen sowie die Breite der Erhebungen, z. B. die Maschenbreite eines Gitters oder Gewebes und die Lochgröße eines Lochblechs, bestimmen dabei die Menge des aufgenommenen Leims. Somit lassen sich je nach Leimtyp und Etikettentyp ideale Oberflächenstrukturen definieren, um eine zuverlässige Beleimung der Etiketten zu garantieren.

Gemäß einer weiteren Weiterbildung kann die Leimwalze eine Grundwalze umfassen, die derart ausgebildet ist, dass mindestens ein Oberflächenelement der Leimwalze wechselbar an der Grundwalze befestigt werden kann, wobei das mindestens eine Oberflächenelement insbesondere derart ausgebildet ist, dass es mindestens ein Kontaktsegment aufweist. Beispielsweise kann die Grundwalze eine zylindrische Form aufweisen, deren Radius um die Dicke des Oberflächenelements geringer als der Radius der Mantelfläche ist. Die Grundwalze kann wie gehabt mittels einer steuer- und/oder regelbaren Antriebseinrichtung angetrieben werden. Das Oberflächenelement kann z. B. als Hohlzylinder ausgebildet sein, der über die Grundwalze gestülpt und an dieser befestigt wird. In diesem Fall ist das mindestens eine Kontaktsegment auf oder in dem Oberflächenelement definiert. Beispielsweise kann der Hohlzylinder im Bereich der Kontaktsegmente wie oben beschrieben als Gitter, Lochblech oder Gewebe ausgebildet sein. In diesem Fall lässt sich das von der Grundwalze abgenommene Oberflächenelement besonders einfach von Leimresten reinigen. Alternativ können die Vertiefungen aber auch in der äußeren Oberfläche des Oberflächensegments ausgebildet sein, ohne durch dieses hindurch zu gehen.

Beide Ausbildungen der Kontaktsegmente lassen sich auch realisieren, wenn das Oberflächenelement nicht vollumfänglich über die Grundwalze gestülpt wird, sondern nur an einem Teilbereich der Grundwalze, beispielsweise als Einsatz in eine dort vorgesehene Ausnehmung der Grundwalze, befestigt wird. In diesem Fall können insbesondere zwei oder mehr Oberflächenelemente vorgesehen sein, die an verschiedenen Bereichen der Grundwalze befestigt werden. Die einzelnen Oberflächenelemente können jeweils ein oder mehrere Kontaktsegmente aufweisen und unabhängig voneinander abgenommen und durch andere Oberflächenelemente ausgetauscht werden. Das erleichtert einerseits die Reinigung der Oberflächenelemente, erhöht andererseits aber auch enorm die Einsatzmöglichkeiten der Leimwalze. Ein Produktwechsel auf eine andere Etikettenform kann somit durch einfaches Austauschen eines oder mehrerer Oberflächenelemente erfolgen.

Das oder die Oberflächenelemente können je nach Ausbildung mit den unterschiedlichsten Vorrichtungen an der Grundwalze befestigt werden. Beispielsweise kann eine Klemmverbindung mittels eines Klemmrings oder eines Spannrings verwendet werden, um das Oberflächenelement an der Grundwalze zu befestigen. Alternativ oder zusätzlich kann die Grundwalze mit schwalbenschwanzförmigen Ausnehmungen versehen sein, in die entsprechende Gegenelemente der Oberflächenelemente gesteckt werden können. Eine Vielzahl alternativer Befestigungsvorrichtungen ist hierbei vorstellbar. Entscheidend ist dabei lediglich, dass die aus Grundwalze und Oberflächenelement(en) zusammengesetzte Leimwalze den oben genannten Anforderungen genügt.

Durch Ausbilden der Leimwalze gemäß dieser Weiterbildung kann auf einen vollständigen Austausch der Leimwalze bei einem Produktwechsel verzichtet werden. Dadurch kann die Leimwalze auf einfache Weise für Etiketten unterschiedlichster Größen und Formen umgerüstet werden. Auch kann die Menge des zu übertragenden Leims durch Austausch der Oberflächenelemente verändert werden, indem beispielsweise Gewebe- oder Gittereinsätze mit größeren oder kleineren Maschenabständen und/oder Maschenstärken verwendet werden. Wie bei der zuvor beschriebenen Leimwalze kann auch bei den Oberflächenelementen der Bereich der Oberflächenelemente außerhalb der Kontaktsegmente glatt ausgebildet sein, um eine gezielte und ausschließliche Abgabe von Leim an die Kontaktsegmente zu ermöglichen.

Wie oben erwähnt kann alternativ oder zusätzlich auch die Leimauftrageeinheit derart ausgebildet sein, dass in dem wenigstens einen Aufnahmeraum befindlicher Leim nur in einem oder mehreren Teilbereichen der Oberfläche der Leimwalze aufgetragen wird. Hierzu kann die Leimauftrageeinheit insbesondere zwei oder mehr in Axialrichtung der Leimwalze räumlich getrennte Aufnahmeräume aufweisen. Hierbei ist die räumliche Trennung in Axialrichtung der Leimwalze derart zu verstehen, dass es zwischen benachbarten Aufnahmeräumen einen Bereich der Leimwalze gibt, der nicht mit Leim versehen wird, wobei die Ausdehnung dieses Bereichs in Axialrichtung über die konstruktionsbedingte Dicke der axialseitigen Begrenzungselemente der Aufnahmeräume hinausgeht. Anders ausgedrückt umfasst die Leimauftrageeinheit zwei oder mehr Untereinheiten mit separaten Aufnahmeräumen, wobei die Untereinheiten als solche in Axialrichtung der Leimwalze räumlich voneinander abgesetzt sind. Dies unterscheidet sich explizit von den weiter unten beschriebenen, durch Trennelemente voneinander getrennten Teilbereichen eines Aufnahmeraums der Leimauftrageeinheit. Insbesondere sind die zwei oder mehr räumlich getrennten Aufnahmeräume gemäß dieser Weiterbildung mit jeweils eigenen Transportleitungen für den aufzutragenden Leim verbunden und können daher unabhängig voneinander mit Leim befüllt und betrieben werden. Beispielsweise kann die Leimauftrageeinheit separate Aufnahmeräume für Rumpf- und Brustetiketten aufweisen, sodass das Aufbringen von Brustetiketten flexibel zugeschaltet oder zwischen Rumpf- und Brustetiketten gewechselt werden kann.

Die räumlich getrennten Aufnahmeräume können derart entlang der Axialrichtung der Leimwalze angeordnet sein, dass die von ihnen beleimbaren axialen Teilbereiche die zuvor beschriebenen Teilbereiche der Axialausdehnung der Leimwalze definieren. Die beleimbaren Teilbereiche können dabei insbesondere den zuvor beschriebenen Kontaktsegmenten der Leimwalze entsprechen. Die beleimbaren Teilbereiche können jedoch auch größer als die Kontaktsegmente der Leimwalze ausgebildet sein, wobei die Oberfläche der Leimwalze außerhalb der Kontaktsegmente wie zuvor beschrieben glatt ausgebildet ist. Auf diese Weise kann durch Austauschen der Leimwalze oder der bereits erwähnten Oberflächenelemente auf einfache Weise eine Umstellung auf Etiketten anderer Größe und/oder Form erfolgen.

Die Leimzufuhr zu den räumlich getrennten Aufnahmeräumen kann mittels einer, insbesondere speicherprogrammierbaren, Steuer- und/oder Regeleinheit der Etikettiervorrichtung gesteuert und/oder geregelt werden. Zu diesem Zweck kann die Etikettiervorrichtung über eine oder mehrere regelbare Leimpumpen und/oder Regelventile in den Transportleitungen für den Leim verfügen. Die Steuer- und/oder Regeleinheit kann die Menge des zugeführten Leims in Abhängigkeit von mindestens einem Regelparameter steuern und/oder regeln, der aus der Gruppe stammt, die von den folgenden Parametern gebildet wird: dem Typ der zu beleimenden Etiketten, der Anzahl der pro Zeiteinheit zu beleimenden Etiketten, der Sorte des verwendeten Leims, der Temperatur des verwendeten Leims, der Umgebungstemperatur der Leimwalze und der zu beleimenden Fläche der Etiketten. Speicherprogrammierbare Steuer- und/oder Regeleinheiten sind im Stand der Technik wohl bekannt, weswegen hier auf eine detaillierte Beschreibung verzichtet wird. Es versteht sich, dass bekannte Elemente wie eine Rechnereinheit, eine Wiedergabeeinheit, wie beispielsweise ein Monitor oder ein Touchscreen, eine Eingabeeinheit wie beispielsweise eine Tastatur oder ein Touchscreen, eine Speichereinheit, insbesondere zur Ablage eines oder mehrerer der oben genannten Parameter in Form einer Sortenverwaltung, und dergleichen Teil der genannten speicherprogrammierbaren Steuer- und/oder Regeleinheit sein können.

Einige der Regelparameter, wie beispielsweise der Typ der zu beleimenden Etiketten, die Sorte des verwendeten Leims oder die zu beleimende Fläche der Etiketten, können in der Art einer Sortenverwaltung vorgegeben werden, indem sie bei einem Produktwechsel z. B. aus der oben erwähnten Speichereinheit ausgelesen werden. Andere Regelparameter, wie beispielsweise die Anzahl der pro Zeiteinheit zu beleimenden Etiketten, die Temperatur des verwendeten Leims oder die Umgebungstemperatur der Leimwalze, können durch entsprechende Sensoren, z. B. optische Sensoren zur Messung des Durchsatzes an Behältern oder Temperatursensoren, bestimmt und zur Regelung der Leimpumpe und/oder Regelventile verwendet werden. Beispielsweise kann die Steuer- und/oder Regeleinheit die Leimpumpe in Abhängigkeit des gemessenen Durchsatzes an Behältern derart regeln, dass exakt die Menge an Leim aus dem Vorratsbehälter entnommen und dem oder den Aufnahmeräumen zugeführt wird, die zum Beleimen der entsprechenden Anzahl von Etiketten und der entsprechenden Teilbereiche der Leimwalze benötigt wird. Weitere Regelparameter, wie beispielsweise eine Viskosität des Leims oder eine Oberflächenbeschaffenheit der zu etikettierenden Behälter, können bei der Steuerung und/oder Regelung der Leimzufuhr berücksichtigt werden. Der Typ der zu beleimenden Etiketten kann neben dem Material der Etiketten auch die Größe und das Format der Etiketten umfassen. Etiketten können beispielsweise als Rundumetiketten oder Front- und Rückseitenetiketten ausgelegt sein. Ebenso können Rumpf- und Brustetiketten für zu etikettierende Flaschen vorgesehen sein. Die Leimsorte kann wie oben beschrieben z. B. durch einen Kaseinleim, einen Dextrinleim oder einen Dispersionsleim gegeben sein. Die Umgebungstemperatur der Leimwalze hat Einfluss auf die Hafteigenschaften des Leims auf dem Etikett und somit auf die Menge des von dem Etikett bzw. der Palette von der Leimwalze abgenommenen Leims.

Erfindungsgemäß weist die Leimauftrageeinheit leimwalzenseitig mindestens einen steuerbaren Schieber auf, mit dem der mindestens eine Aufnahmeraum leimwalzenseitig, insbesondere luftdicht, verschließbar ist. Dazu kann der steuerbare Schieber derart ausgebildet und angeordnet sein, dass er mittels eines ansteuerbaren Stellantriebs, beispielsweise eines Pneumatikzylinders oder eines Servomotors, der Leimauftrageeinheit vor die Öffnung des Aufnahmeraums auf der Seite der Leimwalze geschoben werden kann, um diese luftdicht zu verschließen. Im Betrieb wird der Schieber automatisch so weit geöffnet, dass der in dem Aufnahmeraum befindliche Leim wieder mit der Leimwalzenoberfläche in Kontakt treten kann und die Leimwalze sofort wieder betriebsbereit ist. Um den Aufnahmeraum luftdicht verschließen zu können, kann eines der unten beschriebenen, umfangsseitigen Wandelemente der Leimauftrageeinheit eine Hohlkehle oder ähnliches aufweisen, in die der Schieber hinein bewegbar ist. Somit kann die Leimkammer, d. h. der Aufnahmeraum, bei längeren Unterbrechungen des Etikettierbetriebs oder am Schichtende über Nacht durch den Schieber verschlossen werden, sodass der darin befindliche Leim vor dem Austrocknen und einer Veränderung seiner chemischen Eigenschaften durch Kontakt mit der Umgebungsluft geschützt wird. Die Leimauftrage-einheit kann in diesem Ruhe- oder Reinigungsmodus wie unten beschrieben von der Leimwalze weggeschaltet werden, sodass die Leimwalze beispielsweise mit einer anstellbaren, rotierenden Bürste und Wasser oder einer anderen Reinigungsflüssigkeit gereinigt werden kann. Da der Leim somit in dem luftdicht verschlossenen Aufnahmeraum der Leimauftrageeinheit verbleiben kann, kann auf die sonst übliche Rücklaufleitung des Leimschabers, d. h. der Leimauftrageeinheit, verzichtet werden.

Gemäß einer speziellen Weiterbildung kann der Schieber zwei oder mehr einzeln steuerbare Segmente aufweisen, welche unterschiedlichen Bereichen des Aufnahmeraums in Axialrichtung der Leimwalze zugeordnet sind. Da der Aufnahmeraum in Axialrichtung der Leimwalze ausgerichtet ist, definieren diese unabhängig voneinander steuerbaren Segmente somit voneinander getrennte Teilbereiche in Axialrichtung der Leimwalze. Ist ein Segment eines solchen Schiebers geöffnet, so wird der entsprechende Teilbereich mit Leim beaufschlagt. Auf diese Weise kann durch individuelles Ansteuern der Segmente des Schiebers eine flexible Auswahl der zu beleimenden Teilbereiche erfolgen. Der Aufnahmeraum muss dazu lediglich bis einschließlich des, in Bezug auf die Axialrichtung der Leimwalze, obersten, offenen Bereichs des Aufnahmeraums mit Leim gefüllt sein. Idealerweise ist der Aufnahmeraum bei Betrieb mit einem segmentierten Schieber vollständig mit Leim gefüllt, sodass lediglich das Öffnen und Schließen der Segmente bestimmt, welche axialen Teilbereiche mit Leim beaufschlagt werden. Zur individuellen Ansteuerung der Segmente kann die Leimauftrageeinheit über entsprechende Mechanismen, beispielsweise eine entsprechende Anzahl von Pneumatik-Zylindern oder Servomotoren, verfügen. Mit der beschriebenen Weiterbildung lässt sich somit auch mit einem einzigen Aufnahmeraum eine flexible Beleimungseinrichtung für verschiedene axiale Teilbereiche der Leimwalze realisieren. Beispielsweise kann der Schieber, ähnlich zu der zuvor beschriebenen Weiterbildung mit räumlich getrennten Aufnahmeräumen, zwei oder mehr Segmente umfassen, die den einzelnen Teilbereichen auf der Oberfläche der Leimwalze zugeordnet sind. Z. B. kann ein Segment für Rumpfetiketten und ein Segment für Brustetiketten vorgesehen sein. Benachbarte Segmente können dabei durch feststehende Stege, die den Aufnahmeraum in dem entsprechenden axialen Teilbereich dauerhaft verschließen, voneinander getrennt sein, sodass die entsprechenden Teilbereiche der Oberfläche der Leimwalze nicht mit Leim beaufschlagt werden.

Gemäß einer speziellen Weiterbildung können die unterschiedlichen Bereiche des Aufnahmeraums durch ein oder mehrere Trennelemente voneinander getrennt sein. Die derart getrennten Teilbereiche des Aufnahmeraums können dabei über separate Abzweigungen der Transportleitung für Leim mit Leim befüllt werden. Regelventile in den Abzweigungen erlauben das unabhängige Befüllen der einzelnen Teilbereiche. Die Trennelemente können zudem mit einer Dicke ausgebildet sein, die der axialen Ausdehnung der entsprechenden, nicht zu beleimenden Teilbereiche der Oberfläche der Leimwalze entspricht. Durch gesteuertes Befüllen der entsprechenden Teilbereiche kann selbst bei einem nicht segmentierten Schieber ein individueller Leimauftrag auf gewünschte Teilbereiche der Oberfläche der Leimwalze erfolgen. Es versteht sich, dass die hier beschriebenen Weiterbildungen mit speziell ausgebildeten Schiebern auch auf die zuvor beschriebene Weiterbildung mit mehreren räumlich getrennten Aufnahmeräumen angewendet werden können.

Gemäß einer Weiterbildung kann die Leimauftrageeinheit wenigstens ein erstes Wandelement und ein zweites Wandelement aufweisen, wobei das erste und zweite Wandelement den Aufnahmeraum in Umfangsrichtung der Leimwalze beidseitig begrenzen. Dabei können sich die Wandelemente im Wesentlichen entlang der Axialrichtung der Leimwalze, insbesondere parallel zur Achse der Leimwalze erstrecken. Das zweite Wandelement ist gemäß dieser Weiterbildung in einer Bewegungsrichtung der Leimwalze hinter dem ersten Wandelement angeordnet, sodass die zwischen den beiden Wandelementen liegende, optional mit dem oben beschriebenen Schieber verschließbare, Öffnung des Aufnahmeraums zur Abgabe von Leim der Leimwalze zugewendet ist. Das erste und/oder zweite Wandelement können insbesondere derart ausgebildet sein, dass sie im Etikettierbetrieb in mechanischem Kontakt mit der Mantelfläche, d. h. insbesondere den glatt ausgebildeten Teilen der Oberfläche der Leimwalze stehen, und diese somit kontaktieren. Beispielsweise können das erste und/oder zweite Wandelement mittels eines Federmechanismus federnd an die Oberfläche der Leimwalze angedrückt werden. Ein die Leimwalze kontaktierendes Wandelement wirkt dabei im Betrieb als Schaber, wobei das im Vorlauf angeordnete Wandelement Leimreste und Verschmutzungen wie Etikettenreste entfernt, während das im Nachlauf angeordnete Wandelement verhindert, dass Leim auf die glatten Bereiche der Oberfläche der Leimwalze aufgebracht wird.

Gemäß einer weiteren Weiterbildung kann sich das erste Wandelement in eine Richtung erstrecken, welche mit der Tangente in Umfangsrichtung an die Leimwalze einen Winkel einschließt, der zwischen 0° und 70°, bevorzugt zwischen 10° und 60° und besonders bevorzugt zwischen 10° und 30° liegt. Damit liegt das Wandelement insbesondere in dem Kontaktbereich mit der Leimwalze unter einem sehr flachen Winkel an, wodurch selbst unter Einwirkung der Federkraft eine Reibungsabnutzung, insbesondere der empfindlichen Kontaktsegmente, minimiert wird. So kann es sich bei dem ersten und/oder zweiten Wandelement um ein federndes Wandelement handeln, welches beispielsweise aus einem elastischen Material gefertigt ist und sich an die Leimwalze andrückt. Durch die Winkelausgestaltung ist zudem ein leichteres Abschaben bzw. Auftragen des Leims auf die Leimwalze möglich. Es versteht sich, dass die Leimauftrageeinheit für jeden Aufnahmeraum die oben beschriebenen Wandelemente aufweisen kann, welche den Aufnahmeraum in Umfangsrichtung der Leimwalze begrenzen.

Gemäß einer Weiterbildung kann die Leimauftrageeinheit weiterhin mindestens eine Dichtungseinrichtung umfassen, welche den Aufnahmeraum auf wenigstens einer in Axialrichtung der Leimwalze gelegenen Seite, insbesondere der in Richtung der Schwerkraft gelegenen Seite, abdichtet. Aufgrund dieser Dichtungseinrichtung wird verhindert, dass der in dem Aufnahmeraum befindliche Leim unkontrolliert aus der Leimauftrageeinheit herausfließt. Bevorzugt kann die Leimauftrageeinheit zwei Dichtungseinrichtungen umfassen, welche den Aufnahmeraum beidseitig in Axialrichtung abdichten. Zusammen mit den Wandelementen, einer Rückwand des Aufnahmeraums und optional dem zuvor beschriebenen Schieber bilden die Dichtungseinrichtungen somit eine verschließbare Hohlkammer mit einer leimwalzenseitigen Öffnung zum Auftragen des in der Hohlkammer befindlichen Leims auf die Oberfläche der Leimwalze. Es versteht sich, dass die Leimauftrageeinheit für jede der zuvor beschriebenen, räumlich getrennten Aufnahmeräume eine derartige Anordnung aufweisen kann. In der Rückwand des Aufnahmeraums kann zudem eine Öffnung zum Anschluss der Transportleitung vorgesehen sein, über die der Aufnahmeraum mit Leim befüllt wird. Zum zuverlässigen Abdichten des Aufnahmeraums kann die Leimwalze der oder den Dichtungseinrichtungen entsprechende, insbesondere glatt ausgebildete, Dichtbereiche der Oberfläche der Leimwalze aufweisen, die von der oder den Dichtungseinrichtungen kontaktiert werden. Durch Ausbilden einer glatten Oberfläche in den Dichtbereichen kann die Dichtwirkung zwischen der Leimwalze und den Dichtungseinrichtungen verbessert werden. Bei Betrieb der Leimwalze gleiten die Dichtungseinrichtungen auf diesen glatten Oberflächen. Die Dichtungseinrichtungen können hierzu aus einem geeigneten, reibungsarmen Material, beispielsweise Edelstahl, gefertigt sein.

Bei einer weiteren Weiterbildung weist die Leimauftrageeinheit keine Abführeinrichtung zum Abführen von Leim aus dem Aufnahmeraum auf. Lediglich eine Entlüftungsbohrung mit einem Ventil kann beispielsweise in der Rückwand oder Seitenwand des Aufnahmeraums vorgesehen sein. Dabei ist die Entlüftungsbohrung bevorzugt oberhalb der Öffnung der Transportleitung zur Zufuhr von Leim angeordnet, sodass der im Inneren des Aufnahmeraums befindliche Leim stets unter einem im Wesentlichen konstanten Druck steht und gleichmäßig verteilt werden kann.

Die Leimauftrageeinheit und/oder die Transportleitung für den Leim können mittels einer regelbaren Heiz- und/oder Kühlvorrichtung beheizbar und/oder kühlbar ausgebildet sein. Eine Heizvorrichtung kann beispielsweise als Heizwendel vorgesehen sein. Heiz- und Kühlvorrichtungen sind im Stand der Technik hinreichend bekannt und werden daher nicht im Detail beschrieben.

Gemäß einer Weiterbildung kann die Leimauftrageeinheit schwenkbar an einem Träger gelagert sein. Dabei kann ein Aktuator, beispielsweise ein Pneumatikzylinder, vorgesehen sein, mittels dessen der Träger und damit die Leimauftrageeinheit an die Leimwalze angestellt und von ihr weggeschaltet werden kann. Sind z. B. im Einlauf der Etikettiervorrichtung keine zu etikettierenden Behälter mehr vorhanden, kann die Leimauftrageeinheit von der Leimwalze weggeschaltet werden, und die Etikettiervorrichtung kann leergefahren werden. Anschließend kann die Leimwalze, beispielsweise zur Reinigung oder Umrüstung auf andere Etiketten, angehalten werden.

Weiterhin können die Leimwalze und/oder die Leimauftrageeinheit in Axialrichtung der Leimwalze verfahrbar ausgebildet sein. Zu diesem Zweck kann ein Linearmotor, beispielsweise mit Spindelantrieb, eingesetzt werden, der die Lagerung der Leimwalze und/oder der Leimauftrageeinheit in Axialrichtung der Leimwalze verschiebt. Durch verfahrbares Ausbilden der Leimwalze und/oder der Leimauftrageeinheit kann die Lage der zu beleimenden Teilbereiche der Oberfläche der Leimwalze an die Position der zu applizierenden Etiketten auf dem Behälter angepasst werden.

Die Leimwalze kann über einen Direktantrieb, beispielsweise mittels eines Servomotors, angetrieben werden. Dabei kann die Leimwalze besonders leicht, z. B. als Hohlzylinder, ausgelegt sein, welcher beispielsweise über eine Hirth-Verzahnung an den Antrieb koppelbar ist und somit leicht ausgetauscht werden kann. Der Antrieb der Leimwalze kann so ausgelegt sein, dass vorzugsweise eine Umdrehung der Leimwalze einer Etikett-Teilung auf dem Vakuumzylinder bzw. einer Paletten-Teilung entspricht. Dabei ist der Umfang der Leimwalze größer als die maximale Abwicklungslänge einer Palette bzw. die maximale Länge des zu applizierenden Etiketts. Weiterhin kann die Leimwalze auch in Umfangsrichtung einstellbar ausgebildet sein, sodass die Beleimung exakt der gewünschten Kontur der Etiketten entsprechen kann.

Die oben beschriebenen Weiterbildungen gestatten es, Leim ausschließlich in solchen Bereichen auf die Oberfläche der Leimwalze aufzutragen, wo er von den zu applizierenden Etiketten abgenommen wird. Dadurch wird einerseits die Gesamtmenge an verbrauchtem Leim reduziert und andererseits ein Antrocknen von Leim an der Leimwalze verhindert. Darüber hinaus kann auf den sonst üblichen Leimrücklauf verzichtet werden. Die verwendeten Leimwalzen können derart ausgebildet werden, dass erforderliche Umrüstungen auf einen anderen Etikettentyp auf einfache und schnelle Art und Weise durchführbar sind. Darüber hinaus können die verwendeten Leimauftrageeinheiten derart ausgebildet sein, dass flexibel auf einen Produktwechsel reagiert werden kann. Zudem können besonders einfach und vorteilhaft unterschiedliche Betriebszustände, wie z. B. ein Etikettiermodus, ein Ruhemodus, ein Reinigungsmodus, usw., der resultierenden Etikettiervorrichtung eingestellt werden.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.
Figur 1a stellt eine schematische Draufsicht einer Etikettiervorrichtung dar, bei welcher der Leim direkt von der Leimwalze auf die Etiketten aufgetragen wird.
Figur 1b zeigt das Leimwerk der Figur 1a in einer Detailansicht.
Figur 2a stellt eine schematische Draufsicht einer Etikettiervorrichtung dar, bei welcher der Leim über ein Palettenkarussell auf die Etiketten aufgetragen wird.
Figur 2b zeigt das Leimwerk der Figur 2a in einer Detailansicht.
Figur 3 zeigt schematisch eine beispielhafte Ausführung einer Leimwalze und einer Leimauftrageeinheit gemäß der vorliegenden Erfindung.
Figur 4 zeigt eine Leimauftrageeinheit mit zwei räumlich getrennten Aufnahmeräumen gemäß der vorliegenden Erfindung.
Figur 5 zeigt eine Leimauftrageeinheit mit einem segmentierten Schieber gemäß der vorliegenden Erfindung.
Figur 6 zeigt eine Leimwalze mit auswechselbarem Oberflächenelement gemäß der vorliegenden Erfindung.

Im Folgenden sind gleiche oder gleichartige Elemente mit gleichen Bezugszeichen bezeichnet. Auf eine wiederholte Beschreibung dieser Elemente wird aus Gründen der Klarheit verzichtet. Zudem versteht sich, dass in den folgenden Ausführungsformen einige oder alle Elemente durch gleichartige, im Zusammenhang mit anderen Ausführungsformen beschriebene Elemente ersetzt oder kombiniert werden können.

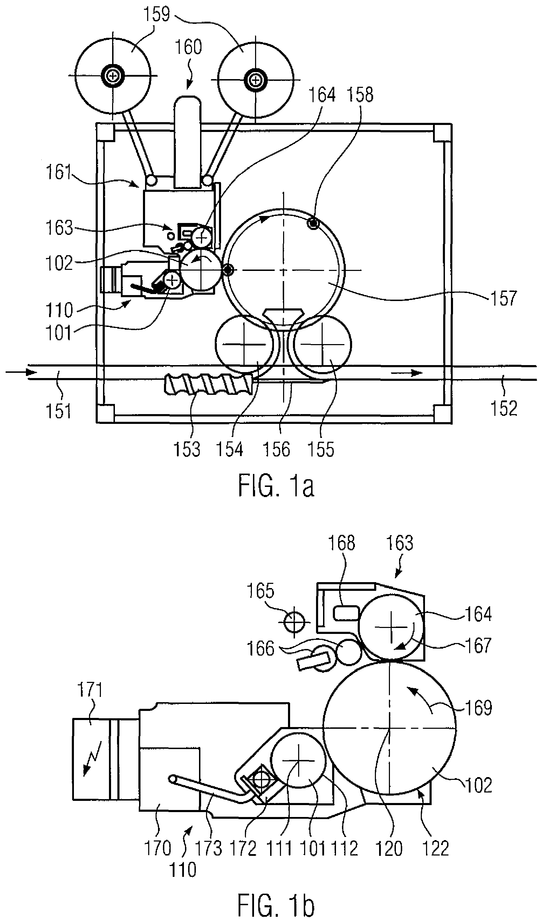

Figur 1a stellt eine schematische Draufsicht einer Etikettiervorrichtung dar, bei welcher der Leim direkt von der Leimwalze auf die Etiketten aufgetragen wird. Das Leimwerk der Figur 1a ist in Figur 1b in einer Detailansicht gezeigt. Die dargestellte Etikettiervorrichtung verfügt über die folgenden, an sich im Stand der Technik bekannten Elemente: einen Zulaufförderer 151 zum kontinuierlichen Zufördern der zu etikettierenden Behälter, ein Einlaufsternrad 154 mit vorgeordneter Einteilschnecke 153, einen Führungsbogen 156, ein Karussell 157 mit einer Vielzahl von in gleichmäßigen Abständen auf einem gemeinsamen Teilkreis angeordneten Drehtellern 158, ein Auslaufsternrad 155 und einen Auslaufförderer 152 zum Abfördern der etikettierten Behälter. Im Umlaufbereich zwischen dem Einlaufsternrad 154 und dem Auslaufsternrad 155 befindet sich an der äußeren Peripherie des Karussells 157 ein Etikettieraggregat 161 zum Aufbringen von Etiketten auf die Behälter. Das hier exemplarisch dargestellte Etikettieraggregat 161 verfügt über zwei Etikettenrollenaufnahmen 159 und eine dazwischen liegende Anspleißstation 160, eine Schneideinrichtung 163 und ein Leimwerk 110 mit einem Vakuumzylinder 102 zum Übertragen der vorgeschnittenen, beleimten Etiketten auf die vorbeilaufenden Behälter.

Der Etikettiervorgang eines Behälters läuft im Einzelnen wie folgt ab: Die vom Zulaufförderer 151 im Allgemeinen auf Stoß herangeführten Behälter werden von der seitlich angeordneten Einteilschnecke 153 auf die Teilung des Einlaufsternrads 154 auseinander gefahren, sodass dieses die aufgenommenen Behälter in Zusammenarbeit mit dem gegenüberliegenden Führungsbogen 156 auf die Drehteller des rotierenden Karussells 157 überführen kann. Dort werden die Behälter von nicht dargestellten Zentrierglocken eingespannt und durch die Umlaufbewegung des Karussells 157 tangential an dem Vakuumzylinder 102 des Etikettieraggregats 110 vorbeigeführt. Zeitgleich wird von einer der Etikettenbandrollen 159 ein Etikettenband gesteuert abgezogen und in der Schneideinrichtung 163 in einzelne Etiketten zerschnitten. Die abgetrennten Etiketten, die sich während des Schneidvorgangs mit dem Druckbild nach außen auf der rotierenden Vakuumwalze 164 befinden, werden nach dem Schneidvorgang an den Vakuumzylinder 102 übergeben, von wo aus sie mit der Rückseite nach außen an der Leimwalze 101 vorbeigeführt und in einem bestimmten, typabhängigen Bereich des Etiketts mit Leim versehen werden. Die mit Leim versehenen Etiketten werden tangential dem Karussell 157, auf dem sich die Behälter befinden, zugeführt. Die zu applizierenden Etiketten werden dabei mit der Beleimung mit den Behältern in Berührung gebracht und durch geeignete Bewegung der Behälter auf diesen abgewickelt. Nach dem Passieren des Etikettieraggregats 110 und nach Abschluss des Aufbringens des Etiketts auf den Behälter wird der etikettierte Behälter von dem Auslaufsternrad 155 an den Auslaufförderer 152 übergeben.

In der Detailansicht der Figur 1b ist neben dem Leimwerk 110 die Schneideinrichtung 163 im Detail zu erkennen. Das von den Etikettenbandrollen 159 abgezogene Etikettenband wird über eine Umlenkrolle 165 und das Rollenpaar 166 der Schneideinrichtung 163 zugeführt. Dort liegt das Etikettenband an der Vakuumwalze 164 an, die sich in Richtung des Pfeils 167 dreht, und wird von einem Trennelement 168 entsprechend den Schnittmarken bzw. dem Druckbild geschnitten. Die geschnittenen Etiketten werden an den Vakuumzylinder 102, der sich in Richtung des Pfeils 169 dreht, übergeben. Die Etiketten liegen somit an der Mantelfläche 122 des Vakuumzylinders 102 an, der sich um die Achse 120 dreht. Die Mantelfläche 122 des Vakuumzylinders 102 weist Elemente (nicht dargestellt) auf, die jeweils den Anfang bzw. das Ende des Etiketts aufnehmen. Zur Aufnahme verschiedener Etikettenlängen kann der Vakuumzylinder getauscht werden.

Bei der Vorbeibewegung der Etiketten an der Leimwalze 101 werden einzelne Bereiche oder die gesamte Rückseite der Etiketten in Kontakt mit der Leimwalze gebracht, sodass diese an bestimmten Stellen mit Leim versehen werden. Die Menge des zu übertragenden Leims hängt dabei vom Etikettentyp und den zu beleimenden Bereichen ab. Um ein Etikett mit Leim versehen zu können, wird ein Leimwerk 110 benötigt. Das in Figur 1b dargestellte Leimwerk 110 ist mit einer Leimwalze 101 und einer Leimauftrageeinheit 172 gemäß der vorliegenden Erfindung ausgebildet. Von einer mittels einer optionalen Leimheizung 171 beheizbaren Vorrichtung 170 zum Entnehmen von Leim aus einem Vorratsbehälter zur Bevorratung von Leim, beispielsweise einer regelbaren Leimpumpe, wird der entnommene Leim über eine Transportleitung 173 zu der hier schematisch dargestellten Leimauftrageeinheit 172 geführt und mittels dieser auf die Oberfläche 112 der um die Leimwalzenachse 111 rotierenden Leimwalze 101 übertragen. Die Leimauftrageeinheit 172 ist hierbei wie unten genauer dargestellt als Kammerleimschaber mit mindestens einem Aufnahmeraum für den Leim ausgebildet, der der Leimwalze 101 so nahe zugestellt werden kann, dass Leim durch eine Öffnung des Aufnahmeraums auf die Oberfläche 112 der rotierenden Leimwalze 101 aufgetragen wird.

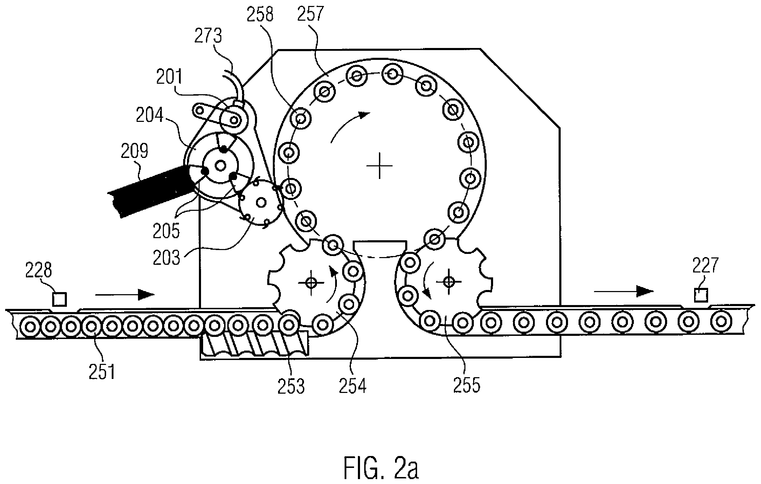

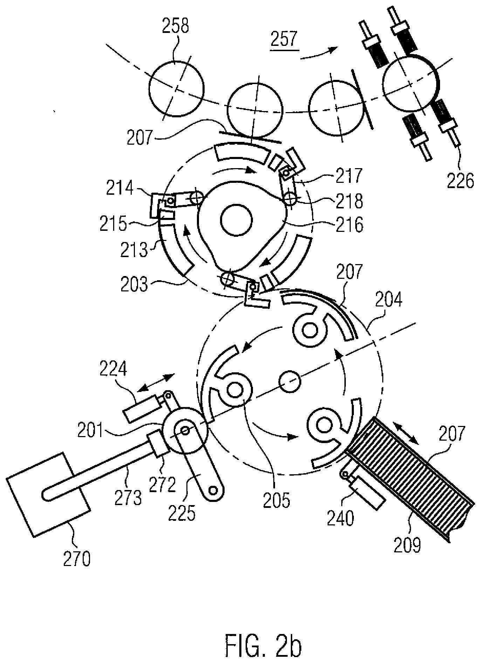

Figur 2a stellt eine schematische Draufsicht einer alternativen Etikettiervorrichtung dar, bei welcher der Leim über ein Palettenkarussell auf die Etiketten aufgetragen wird. Eine Detailansicht des Leimwerks der Figur 2a ist in Figur 2b gezeigt. Auf einem sich drehenden Träger 204 des Karussells sind mehrere Entnahmeelemente 205, sogenannte Paletten, drehbar angeordnet. Bei der Rotation des Palettenkarussells wälzt sich die Aufnahmefläche eines jeden Entnahmeelements 205 an der beleimten Oberfläche der Leimwalze 201 ab, entnimmt dem Etikettenbehälter 209 durch Haftwirkung ein Etikett 207, wobei dieses auf der Rückseite beleimt wird, und übergibt es an den Greiferzylinder 203, der es auf die Behälter überträgt. Diese wurden zuvor in einem Einlaufstrom 251 einer Einteilschnecke 253 zugeführt, welche die für das Einlaufsternrad 254 nötige Teilung erzeugt. Entlang des Einlaufstroms 151 kann zudem ein Sensor zum Bestimmen eines Durchsatzes an zu etikettierenden Behältern angeordnet sein. Von dem Einlaufsternrad 254 werden die zu etikettierenden Behälter an die Drehteller 258 eines Karussells 257 übergeben, welches die Behälter an dem Greiferzylinder 203 vorbeiführt. Auch hier wird durch geeignetes Drehen der von den Drehtellern 258 aufgenommenen Behälter ein Abrollen des von dem Greiferzylinder 203 zugeführten zu applizierenden Etiketts auf die Oberfläche des Behälters bewirkt. Das auf den Behälter aufgebrachte Etikett kann anschließend mit Bürsten 226 an den Behälter angedrückt werden. Die etikettierten Behälter werden schließlich über ein Auslaufsternrad 255 an einen Auslaufstrom übergeben, wo ein optischer Sensor 227 eine Qualitätskontrolle der etikettierten Behälter durchführen kann.

Weitere Details des Etikettieraggregats sind in Figur 2b gezeigt. Beispielsweise kann der Etikettenbehälter 209 über einen Pneumatikzylinder 240 im Etikettiermodus an das Palettenkarussell 204 angestellt und im Ruhemodus von diesem weggeschaltet werden. Die Paletten 205 des Palettenkarussells 204 können mittels einer Steuerkurve (nicht dargestellt) derart verschwenkt werden, dass sie von der Leimwalze 201 beleimt werden und anschließend je ein Etikett 207 aus dem Etikettenbehälter 209 aufnehmen. Die Leimwalze 201 kann an einer mittels eines Pneumatikzylinders 224 verschwenkbaren Halterung 225 gelagert sein, wodurch sie im Etikettiermodus an das Palettenkarussell 204 angestellt und im Ruhemodus von diesem weggeschaltet werden kann. Über die Transportleitung 273 wird der von der Entnahmevorrichtung 270, beispielsweise der Leimpumpe, aus dem Vorratsbehälter (nicht dargestellt) entnommene Leim einer hier schematisch dargestellten Leimauftrageeinheit 272, beispielsweise in Form eines Kammerleimschabers, zugeführt, die den Leim auf die Oberfläche der Leimwalze 201 überträgt. Die von den Paletten 205 aus dem Etikettenbehälter 209 entnommenen Etiketten 207 werden an den Greiferzylinder 203 übergeben. Dieser nimmt das jeweilige Etikett 207 mittels eines Greiferfingers 214 und eines Ambosses 215 von der Palette 205 ab, wobei die beleimte Seite des Etiketts 207 auf einem Greiferschwamm 213 zu liegen kommt. Die Bewegung der an Greiferhebeln 217 gelagerten Greiferfinger 214 wird dabei durch das Abrollen der ebenfalls an den Greiferhebeln 217 befestigten Greiferrollen 218 auf einer Steuerkurve 216 des Greiferzylinders 203 bewirkt. Zur Übergabe der Etiketten 207 an die Behälter werden die Greiferfinger 217 erneut geöffnet.

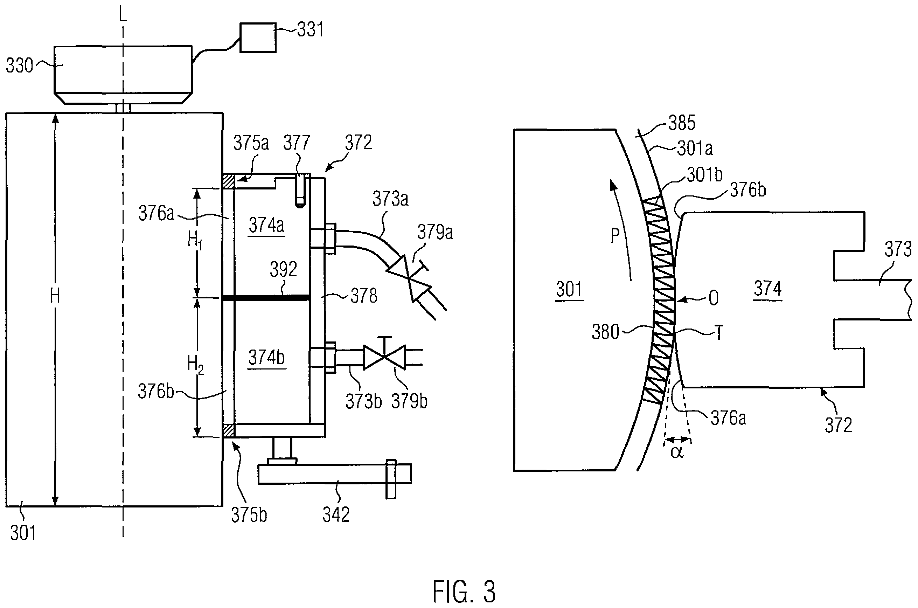

Figur 3 zeigt schematisch eine beispielhafte Ausführung einer Leimwalze und einer Leimauftrageeinheit in Form eines Hohlkammerleimschabers gemäß der vorliegenden Erfindung. In der Figur sind aus Platzgründen mehrere optionale Elemente miteinander kombiniert dargestellt, welche aber wie oben beschrieben auch unabhängig voneinander und separat vorgesehen sein können. Die dargestellte Weiterbildung umfasst eine Leimwalze 301, von der im linken Teil der Figur die streng zylindrische Mantelfläche im Querschnitt gezeigt ist. Die maximale Gesamtausdehnung dieser Mantelfläche in Richtung der Drehachse L, um welche die Leimwalze 301 mittels des Antriebs 330 rotiert wird, ist in der Figur mit H bezeichnet. Diese Höhe H entspricht gleichzeitig der axialen Ausdehnung der maximal beleimbaren Oberfläche der Leimwalze. Der Antrieb 330 ist in dieser Ausführung als regelbarer Servomotor ausgebildet, der mittels einer Steuer- und/oder Regeleinheit 331 geregelt wird.

Der Leimwalze 301 ist an ihrem Umfang eine Leimauftrageeinheit 372 gemäß der vorliegenden Erfindung zugeordnet, wobei die Leimauftrageeinheit 372 im Betrieb gezeigt ist. Der Aufnahmeraum der Leimauftrageeinheit ist in dieser nicht limitierenden Weiterbildung durch Vorsehen eines Trennelements 392 in zwei in Axialrichtung aufeinanderfolgende Bereiche 374a und 374b aufgeteilt, welche über separate Transportleitungen 373a und 373b mit unabhängig voneinander steuerbaren Regelventilen 379a und 379b unabhängig voneinander mit Leim versorgt werden können. Es versteht sich, dass die Leimauftrageeinheit 372 auch wie oben beschrieben lediglich einen Aufnahmeraum und eine Transportleitung aufweisen kann. Die hier dargestellten Unterbereiche des Aufnahmeraums decken aufeinanderfolgende Teilbereiche der axialen Ausdehnung der Oberfläche der Leimwalze mit Höhen H₁ und H₂ ab. Erfindungsgemäß ist die Gesamtausdehnung H₁ + H₂ der von der Leimauftrageeinheit 372 beleimbaren Teilbereiche der Oberfläche der Leimwalze 301 kleiner als die in Axialrichtung der Leimwalze gesehene Gesamtausdehnung H der Oberfläche der Leimwalze.

Die in dieser Ausführung gezeigte Leimauftrageeinheit ist weiterhin schwenkbar an einem Träger 342 gelagert, sodass die gesamte Leimauftrageeinheit im Betrieb an die Oberfläche der Leimwalze 301 angestellt und im Ruhemodus bzw. Reinigungsmodus von ihr weggeschaltet werden kann. In der linken Teilfigur sind weiterhin Dichtungseinrichtungen 375a und 375b gezeigt, welche den Aufnahmeraum der Leimauftrageeinheit nach oben und unten in Axialrichtung abdichten, sodass kein Leim unkontrolliert austreten kann. Bevorzugt gleiten diese Dichtungseinrichtungen auf einem glatten Teil der Oberfläche der Leimwalze. Zusätzlich zeigt die Figur eine optionale Entlüftungsbohrung 377 im oberen Wandelement der Leimauftrageeinheit, welche einen konstanten Leimdruck im Inneren des Aufnahmeraums ermöglicht. Schließlich ist in der linken Teilfigur das erste Wandelement 376a angedeutet, welches den Aufnahmeraum in Umfangsrichtung der Leimwalze 301 bzgl. der Bewegungsrichtung der Leimwalze vorne begrenzt.

Die Anordnung des ersten Wandelements 376a und des zweiten Wandelements 376b ist in der rechten Teilfigur mittels eines horizontalen Querschnitts durch die Leimwalze 301 und die Leimauftrageeinheit 372 genauer dargestellt. Da sich die Leimwalze 301 in Richtung des Pfeils P dreht, trifft ein Flächenelement der Oberfläche 301b der Leimwalze 301 zunächst auf das erste Wandelement 376a und anschließend auf das zweite Wandelement 376b. In der hier dargestellten Weiterbildung kontaktieren sowohl das erste als auch das zweite Wandelement die Oberfläche der Leimwalze, wobei die Wandelemente durch Federelemente (nicht dargestellt) an die Oberfläche angedrückt werden können. Zwischen den Wandelementen 376a und 376b, die sich in axialer Richtung erstrecken, befindet sich eine Öffnung O des Aufnahmeraums 374, die sich ebenfalls in axialer Richtung erstreckt. Durch diese Öffnung O tritt der Leim aus dem Aufnahmeraum 374 aus und wird auf die Oberfläche 301b der Leimwalze 301 aufgebracht.

Der dargestellte Querschnitt zeigt weiterhin ein Kontaktsegment 380 gemäß der vorliegenden Erfindung. Das Kontaktsegment 380 ist, wie in der Figur erkennbar, in Umfangsrichtung der Leimwalze begrenzt. Ebenso ist das Kontaktsegment erfindungsgemäß in axialer Richtung der Leimwalze auf den zu beleimenden Teilbereich der Oberfläche der Leimwalze begrenzt. In der hier dargestellten Ausführung weist die Oberfläche der Leimwalze im Bereich des Kontaktsegments 380 eine Struktur 301b aus Vertiefungen und Erhebungen auf, die dazu geeignet ist, die gewünschte Menge an Leim von der Leimauftrageeinheit 372 in den Vertiefungen aufzunehmen. Außerhalb des Kontaktsegments 380 ist die Oberfläche 301a der Leimwalze 301 glatt ausgebildet, sodass das an der Oberfläche anliegende Wandelement 376b einen Leimauftrag auf diesem Teil der Leimwalze verhindert. In der dargestellten Ausführung ist das Kontaktsegment 380 als Teil des weiter unten beschriebenen, austauschbaren Oberflächenelements 385 ausgebildet, welches seinerseits in Form eines Hohlzylinders ausgebildet ist. Das Kontaktsegment kann jedoch auch als Teil der Leimwalze selbst ausgebildet sein.

Um eine übermäßige Reibungsabnutzung zwischen Leimwalze 301 und Wandelementen zu verhindern, sind die beiden Wandelemente 376a und 376b unten einem flachen Winkel α zur Tangente T in Umfangsrichtung an die Mantelfläche der Leimwalze angeordnet. Darüber hinaus kann die Ausdehnung der Wandelemente in Axialrichtung größer als die Ausdehnung des Kontaktsegments 380 in Axialrichtung gewählt werden, um ein Verhaken der Wandelemente in der Struktur des Kontaktsegments zu vermeiden. Der Winkel α kann wie oben erwähnt zwischen 0° und 70°, bevorzugt zwischen 10° und 60° und besonders bevorzugt zwischen 10° und 30° liegen.

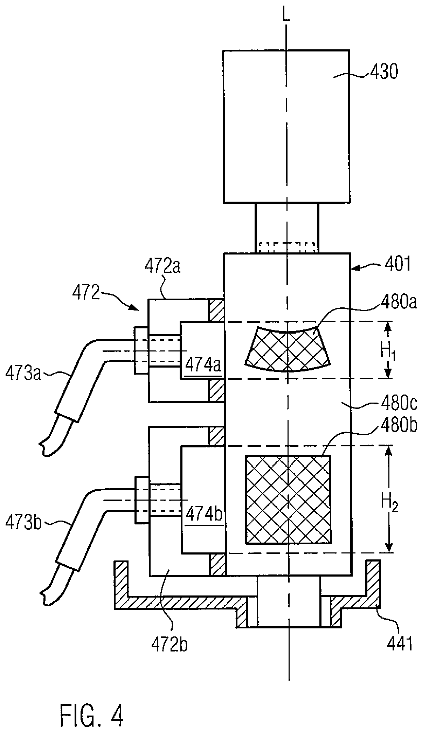

In Figur 4 ist eine alternative Weiterbildung der Leimwalze und der Leimauftrageeinheit gemäß der vorliegenden Erfindung gezeigt. In dieser Weiterbildung umfasst die Leimauftrageeinheit 472 zwei räumlich voneinander getrennte Untereinheiten 472a und 472b in Form von Hohlkammerleimschabern für Brust- bzw. Rumpfetiketten, welche jeweils über einen eigenen Aufnahmeraum 474a und 474b verfügen. Die beiden Aufnahmeräume sind somit in Axialrichtung der Leimwalze 401 räumlich voneinander getrennt und definieren räumlich voneinander getrennten, beleimbare Teilbereiche 480a und 480b mit axialen Ausdehnungen H₁ und H₂ der Oberfläche der Leimwalze. Zwischen diesen Teilbereichen 480a und 480b liegt der nicht mit Leim beaufschlagte Bereich 480c. Wie zuvor beschrieben wird auch hier die Rotation der Leimwalze 401 um ihre Rotationsachse L durch einen regelbaren Antrieb 430 bewirkt. Die Untereinheiten 472a und 472b der Leimauftrageeinheit verfügen über separate Zuführleitungen 473a und 473b für den Leim, sodass die Untereinheiten unabhängig voneinander betrieben werden können. Dadurch kann die dargestellte Beleimungseinrichtung z. B. zum Aufbringen von Rumpfetiketten verwendet werden, wenn die Untereinheit 472b aktiv ist. Alternativ oder zusätzlich kann die Beleimungseinrichtung zum Aufbringen von Brustetiketten verwendet werden, wenn (auch) die Untereinheit 472a aktiv ist. Regelbare Ventile in den Zuführleitungen 473a und 473b können dabei die Leimzufuhr in Abhängigkeit von den zu beleimenden Etiketten steuern. Sollte dennoch überschüssiger Leim an der Leimwalze herunterlaufen, kann dieser in einer Leimschale 441 aufgefangen werden. Da die Zufuhr von Leim zu den Aufnahmeräumen 474a und 474b jedoch derart gesteuert erfolgen kann, dass stets nur der benötigte Leim nachgeliefert wird, kann auf eine Rücklaufleitung der Hohlkammern explizit verzichtet werden.

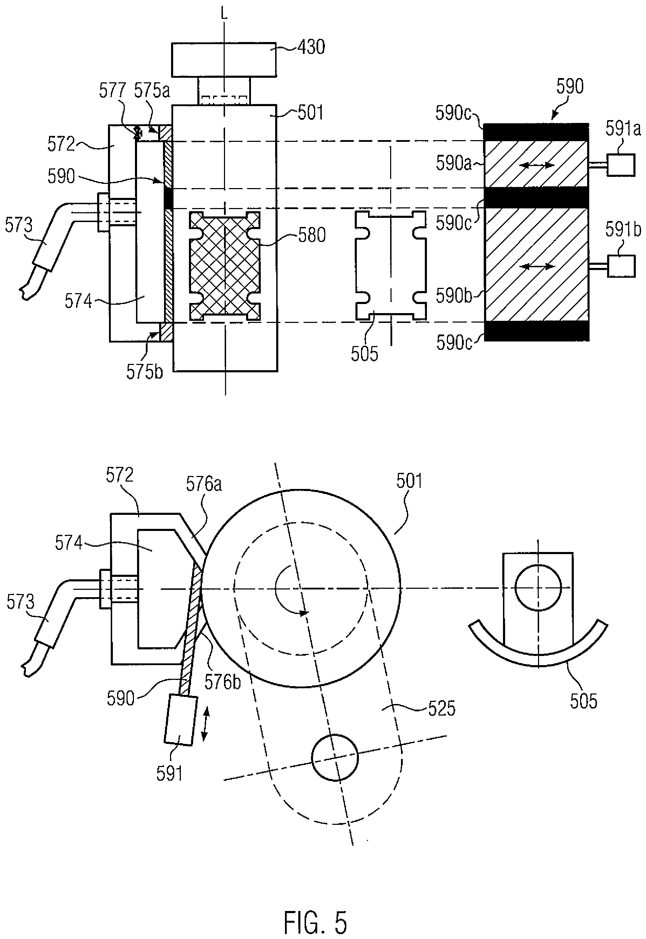

In Figur 5 ist eine weitere Weiterbildung einer Leimauftrageeinheit gemäß der vorliegenden Erfindung dargestellt. In dieser Weiterbildung weist die Leimauftrageeinheit 572 lediglich einen Aufnahmeraum 574 mit einer Zuführleitung 573 für den Leim auf. Während die obere Teilfigur die Beleimungseinrichtung in einem senkrechten Querschnitt zeigt, ist in der unteren Teilfigur der entsprechende horizontale Querschnitt gezeigt. Neben der Leimwalze 501 und der Leimauftrageeinheit 572 zeigen die Figuren des Weiteren eine exemplarische Palette 505, welche drehbar an einem Palettenkarussell gelagert ist. Die gekrümmte Haftfläche der Palette 505 besitzt dabei eine der Form des strukturierten Kontaktsegments 580 der Leimwalze 501 entsprechende Form, sodass der auf das Kontaktsegment 580 aufgetragene Leim annähernd vollständig von der Palette 505 übernommen werden kann. Die Leimwalze 501 wird auch in dieser Weiterbildung von einem regelbaren Antrieb 430 angetrieben. Zusätzlich ist hier die Leimwalze 501 schwenkbar an einem Träger 525 gelagert, der beispielsweise mittels eines Pneumatikzylinders (nicht dargestellt) an das Palettenkarussell angestellt werden kann. Dabei kann die Leimauftrageeinheit 572 zusammen mit der Leimwalze verschwenkbar ausgebildet sein.

Wie in den vorigen Weiterbildungen umfasst auch hier die Leimauftrageeinheit 572 Dichtungseinrichtungen 575a und 575b, die die Leimkammer 574 nach oben und unten abdichten. Zusätzlich ist in dieser Weiterbildung eine mit einem Regelventil versehene Lüftungsbohrung 577 zum Entlüften der Hohlkammer gezeigt. Darüber hinaus verfügt die Leimauftrageeinheit 572 in dieser Weiterbildung über einen segmentierten Schieber 590, der mittels eines Stellantriebs 591 derart vor die Öffnung der Hohlkammer 574 geschoben werden kann, dass diese leimwalzenseitig luftdicht abgedichtet ist. Damit kann der im Aufnahmeraum 574 befindliche Leim bei längerer Unterbrechung des Etikettierbetriebs vor Eintrocknen geschützt werden. Zur Fortsetzung des Etikettierbetriebs wird der Schieber 590 wieder zurückgezogen, um die Öffnung des Kammerleimschabers 572 wieder freizugeben.

Wie erwähnt ist der Schieber 590 in der gezeigten Ausführung segmentiert ausgebildet. Insbesondere umfasst der Schieber 590 zwei unabhängig voneinander mittels der Stellantriebe 591a und 591b steuerbare Segmente 590a und 590b, zwischen denen sich ein feststehendes Segment 590c befindet (siehe rechte Seite der oberen Teilfigur). Auch im Bereich der Dichtungseinrichtungen 575a und 575b ist der Schieber 590 mit feststehenden Segmenten 590c ausgebildet. Durch individuelles Ansteuern der Segmente 590a und 590b können unterschiedliche Teilbereiche der Leimwalze 501 unabhängig voneinander beleimt werden. In der dargestellten Konfiguration der Leimwalze 501 mit einem Kontaktsegment 580 für ein Rumpfetikett kann beispielsweise das obere Segment 590a des Schiebers 590 geschlossen bleiben, während das untere Segment 590b geöffnet ist. Selbst bei vollständig gefülltem Aufnahmeraum 574 wird somit in dieser Konfiguration Leim ausschließlich im Bereich des Kontaktsegments 580 auf die Leimwalze aufgetragen. Die Zufuhr von Leim über die Zuführleitung 573 kann in diesem Fall gegenüber dem gleichzeitigen Beleimen von Rumpf- und Brustetiketten entsprechend reduziert werden.

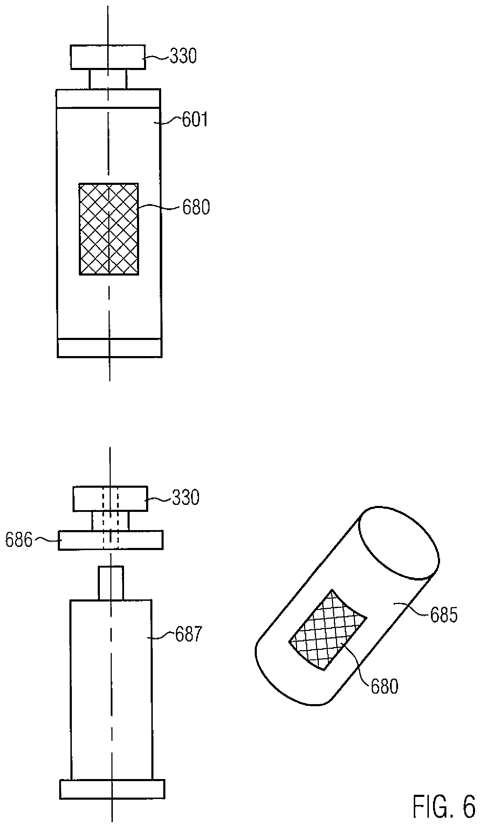

Die Figur 6 zeigt schließlich eine Leimwalze mit auswechselbarem Oberflächenelement gemäß der vorliegenden Erfindung. In der gezeigten Ausführung umfasst die erneut von einem regelbaren Antrieb 330 angetriebene Leimwalze 601 eine Grundwalze 687, über die ein Oberflächenelement 685 in Form eines Hohlzylinders vollumfänglich gestülpt werden kann. Durch Abnehmen des Deckels 686 und des Antriebs 330 kann somit auf einfache Weise eine Umrüstung der Beleimungseinrichtung auf andere Etiketten erfolgen. Dabei ist das Kontaktsegment 680 auf oder in dem zylinderförmigen Oberflächenelement 685 ausgebildet. Insbesondere kann das Kontaktsegment 680 in Form eines Gitters, Lochbleches oder Gewebes ausgebildet sein, dessen Öffnungen zur einfacheren Reinigung durch das Oberflächenelement hindurch gehen. Alternativ kann das Kontaktsegment 680 wie beschrieben in der Oberfläche des Oberflächenelements 680 ausgebildet sein. Wie oben beschrieben, können statt eines vollumfänglichen Oberflächenelements auch ein oder mehrere Oberflächenelemente verwendet werden, die in Ausnehmungen der Oberfläche der Grundwalze 687 eingesetzt oder eingehängt werden können. Auf diese Weise lässt sich eine flexible Gestaltung der Leimwalze 601 für eine Vielzahl unterschiedlicher Etikettenformen und -größen erzielen.

Die beschriebenen Ausführungsformen erlauben es, gezielt Leim ausschließlich in den Teilbereichen der Oberfläche der Leimwalze aufzutragen, wo er von den zu beleimenden Etiketten oder Paletten abgenommen wird. Auf diese Weise wird einerseits die eingesetzte Leimmenge reduziert und andererseits der Wartungsaufwand der Beleimungseinrichtung verringert. Insbesondere kann auf einen aufwändigen Rücklauf für überschüssigen Leim verzichtet werden. Darüber hinaus erlaubt die Gestaltung der Leimwalze und der Leimauftrageeinheit einen schnellen Produktwechsel und einen einfachen Wechsel zwischen Betriebsmodus und Ruhemodus der Etikettiervorrichtung.

## Patentansprüche

1. Etikettiervorrichtung zum Aufbringen von Etiketten auf Behälter, umfassend eine Beleimungseinrichtung mit einer Leimwalze (101, 201, 301, 401, 501, 601) und einer der Leimwalze zugeordneten Leimauftrageeinheit (172, 272, 372, 472, 572) zum Auftragen von Leim auf die Leimwalze (101, 201, 301, 401, 501, 601), wobei die Leimauftrageeinheit (172, 272, 372, 472, 572) wenigstens einen Aufnahmeraum (374a, 374b; 474a, 474b; 574) zur Aufnahme des Leims aufweist,
wobei die Leimwalze (101, 201, 301, 401, 501, 601) und/oder die Leimauftrageeinheit (172, 272, 372, 472, 572) derart ausgebildet sind und die Leimwalze und die Leimauftrageeinheit derart zueinander angeordnet sind, dass in dem Aufnahmeraum (374a, 374b; 474a, 474b; 574) befindlicher Leim nur in einem oder mehreren Teilbereichen der in Axialrichtung der Leimwalze gesehenen Gesamtausdehnung der Oberfläche der Leimwalze auf die Oberfläche der Leimwalze aufgetragen wird;
**dadurch gekennzeichnet, dass**
die Leimauftrageeinheit (572) leimwalzenseitig mindestens einen steuerbaren Schieber (590) aufweist, mit dem der mindestens eine Aufnahmeraum (574) leimwalzenseitig, insbesondere luftdicht, verschließbar ist.

2. Etikettiervorrichtung nach Anspruch 1, wobei die Leimwalze (101, 201, 301, 401, 501, 601) mindestens ein dem einen oder mehreren Teilbereichen in Axialrichtung entsprechendes Kontaktsegment (380; 480a, 480b; 580; 680) aufweist, das derart ausgebildet ist, dass es bei Kontakt mit der Leimauftrageeinheit (172, 272, 372, 472, 572) Leim in einer oder mehreren gegenüber der Mantelfläche der Leimwalze radial zurückfallenden Vertiefungen aufnimmt.

3. Etikettiervorrichtung nach Anspruch 2, wobei das mindestens eine Kontaktsegment (380; 480a, 480b; 580; 680) sich nur über einen Teil des Umfangs der Mantelfläche der Leimwalze (101, 201, 301, 401, 501, 601) erstreckt.

4. Etikettiervorrichtung nach Anspruch 2 oder 3, wobei die Oberfläche (301a) der Leimwalze (101, 201, 301, 401, 501, 601) außerhalb des mindestens einen Kontaktsegments (380; 480a, 480b; 580; 680) glatt ausgebildet ist.

5. Etikettiervorrichtung nach einem der Ansprüche 2 bis 4, wobei die eine oder mehreren Vertiefungen als in die Oberfläche eingravierte oder gefräste Vertiefungen, als Zwischenräume einer Struktur der Oberfläche in Form eines Gitters, eines Lochbleches oder eines Gewebes, oder einer Kombination davon ausgebildet sind.

6. Etikettiervorrichtung nach einem der Ansprüche 2 bis 5, wobei die Leimwalze (601) eine Grundwalze (687) umfasst, die derart ausgebildet ist, dass mindestens ein Oberflächenelement (685) der Leimwalze (601) auswechselbar an der Grundwalze (687) befestigt werden kann, wobei das mindestens eine Oberflächenelement (685) insbesondere derart ausgebildet ist, dass es mindestens ein Kontaktsegment (680) aufweist.

7. Etikettiervorrichtung nach einem der vorhergehenden Ansprüche, wobei die Leimauftrageeinheit (472) zwei oder mehr in Axialrichtung der Leimwalze (401) räumlich getrennte Aufnahmeräume (474a, 474b) aufweist.

8. Etikettiervorrichtung nach einem der vorhergehenden Ansprüche, wobei der Schieber (590) zwei oder mehr einzeln steuerbare Segmente (590a, 590b) aufweist, welche unterschiedlichen Bereichen des Aufnahmeraums (374a, 374b) in Axialrichtung der Leimwalze (301, 501) zugeordnet sind.

9. Etikettiervorrichtung nach Anspruch 8, wobei die unterschiedlichen Bereiche des Aufnahmeraums (374a, 374b) durch ein oder mehrere Trennelemente (392) voneinander getrennt sind.

10. Etikettiervorrichtung nach einem der vorhergehenden Ansprüche, wobei die Leimauftrageeinheit wenigstens ein erstes Wandelement (376a; 576a) und ein zweites Wandelement (376b; 576b) aufweist, und wobei das erste und zweite Wandelement den Aufnahmeraum (374a, 374b; 574) in Umfangsrichtung der Leimwalze (301; 501) beidseitig begrenzen.

11. Etikettiervorrichtung nach Anspruch 10, wobei das erste und/oder zweite Wandelement (376a, 376b; 576a, 576b) die Leimwalze (301; 501) im Betrieb kontaktiert und insbesondere federnd an die Oberfläche der Leimwalze (301; 501) angedrückt wird.

12. Etikettiervorrichtung nach einem der vorhergehenden Ansprüche, weiterhin mindestens eine Dichtungseinrichtung (375a, 375b; 575a, 575b) umfassend, welche den Aufnahmeraum (374a, 374b; 574) auf wenigstens einer in Axialrichtung der Leimwalze (301; 501) gelegenen Seite, insbesondere der in Richtung der Schwerkraft gelegenen Seite, abdichtet.

13. Etikettiervorrichtung nach einem der vorhergehenden Ansprüche, wobei die Leimauftrageeinheit (372) schwenkbar an einem Träger (342) gelagert ist.

14. Etikettiervorrichtung nach einem der vorhergehenden Ansprüche, wobei die Leimwalze (101, 201, 301, 401, 501, 601) und/oder die Leimauftrageeinheit (172, 272, 372, 472, 572) in Axialrichtung der Leimwalze verfahrbar ausgebildet sind.

## Claims

1. Labelling apparatus for applying labels to containers, comprising a gluing device having a glue roller (101, 201, 301, 401, 501, 601) and a glue-application unit (172, 272, 372, 472, 572) which is assigned to the glue roller and is intended for applying glue to the glue roller (101, 201, 301, 401, 501, 601), wherein the glue-application unit (172, 272, 372, 472, 572) has at least one accommodating space (374a, 374b; 474a, 474b; 574) for accommodating of glue,
wherein the glue roller (101, 201, 301, 401, 501, 601) and/or the glue-application unit (172, 272, 372, 472, 572) are designed and the glue roller and the glue-application unit are arranged in relation to one another such that glue which is located in the accommodating space (374a, 374b; 474a, 474b; 574) is applied to the surface of the glue roller only in one or more sub-regions of the overall extent - as seen in the axial direction of the glue roller - of the surface of the glue roller;
**characterised in that**
the glue-application unit (572) on the side of the glue roller comprises at least one controllable scraper (590) by means of which the at least one accommodating space (574) can be sealed, in particular hermetically, on the side of the glue roller.

2. Labelling apparatus according to claim 1, wherein the glue roller (101, 201, 301, 401, 501, 601) comprises at least one contact segment (380; 480a, 480b; 580; 680) which corresponds to the one or more sub-regions in the axial direction and which is configured such that it accommodates glue in one or more recesses radially receding vis-à-vis the shell surface of the glue roller in contact with the glue-application unit (172, 272, 372, 472, 572).

3. Labelling apparatus according to claim 2, wherein the at least one contact segment (380, 480a, 480b, 580, 680) only extends over a part of the circumference of the shell surface of the glue roller (101, 201, 301, 401, 501, 601).

4. Labelling apparatus according to claim 2 or 3, wherein the surface (301a) of the glue roller (101, 201, 301, 401, 501, 601) outside the at least one contact segment (380; 480a, 480b; 580; 680) is smooth.

5. Labelling apparatus according to one of claims 2 to 4, wherein the one or more recesses are configured as recesses being engraved or milled into the surface, as gaps of a structure of the surface in form of a grid, a perforated sheet or a fabric, or a combination thereof.

6. Labelling apparatus according to one of claims 2 to 5, wherein the glue roller (601) comprises a base roller (687) which is configured such that at least one surface element (685) of the glue roller (601) can be mounted interchangeably to the base roller (687), wherein the at least one surface element (685) is in particular configured such that is comprises at least one contact segment (680).

7. Labelling apparatus according to one of the preceding claims, wherein the glue-application unit (472) comprises two or more accommodating spaces (474a, 474b) which are spatially separated in the axial direction of the glue roller (401).

8. Labelling apparatus according to one of the preceding claims, wherein the scraper (590) comprises two or more individually controllable segments (590a, 590b) which are assigned to different regions of the accommodating space (374a, 374b) in the axial direction of the glue roller (301, 501).

9. Labelling apparatus according to claim 8, wherein the different regions of the accommodating space (374a, 374b) are separated from one another by one or more separating elements (392).

10. Labelling apparatus according to one of the preceding claims, wherein the glue-application unit comprises at least one first wall element (376a, 576a) and a second wall element (376b, 576b) and wherein the first and the second wall element limit the accommodating space (374a, 374b, 574) on both sides in the circumferential direction of the glue roller (301, 501).

11. Labelling apparatus according to claim 10, wherein the first and/or the second wall element (376a, 376b; 576a, 576b) contact the glue roller (301; 501) in operation and are in particular resiliently pressed on the surface of the glue roller (301, 501).

12. Labelling apparatus according to one of the preceding claims, further comprising at least one sealing unit (375a, 375b; 575a, 575b) sealing the accommodating space (374a, 374b; 574) on at least one side positioned in the axial direction of the glue roller (301; 501), in particular on the side positioned in the gravity direction.

13. Labelling apparatus according to one of the preceding claims, wherein the glue-application unit (372) is pivotedly mounted on a carrier (342).

14. Labelling apparatus according to one of the preceding claims, wherein the glue roller (101, 201, 301, 401, 501, 601) and/or the glue-application unit (172, 272, 372, 472, 572) are movably configured in the axial direction of the glue roller.

## Revendications

1. Dispositif d'étiquetage destiné à l'application d'étiquettes sur des contenants, comprenant un dispositif d'encollage avec un rouleau d'encollage (101, 201, 301, 401, 501, 601) et une unité d'application de colle (172, 272, 372, 472, 572) associée au rouleau d'encollage et destinée à l'application de colle sur le rouleau d'encollage (101, 201, 301, 401, 501, 601), l'unité d'application de colle (172, 272, 372, 472, 572) comportant au moins une chambre d'accueil (374a, 374b; 474a, 474b; 574) destinée à recevoir la colle, dispositif
dans lequel le rouleau d'encollage (101, 201, 301, 401, 501, 601) et/ou l'unité d'application de colle (172, 272, 372, 472, 572) sont configurés de manière telle, et le rouleau d'encollage et l'unité d'application de colle sont agencés de manière telle, que de la colle se trouvant dans la chambre d'accueil (374a, 374b; 474a, 474b; 574) soit appliquée sur la surface du rouleau d'encollage uniquement sur une ou plusieurs zones partielles de l'étendue totale de la surface du rouleau d'encollage vue dans la direction axiale du rouleau d'encollage,
**caractérisé en ce que** l'unité d'application de colle (572) présente du côté du rouleau d'encollage, au moins un coulisseau (590) pouvant être commandé, à l'aide duquel ladite au moins une chambre d'accueil (574) peut être fermée, notamment de manière étanche à l'air, du côté du rouleau d'encollage.

2. Dispositif d'étiquetage selon la revendication 1, dans lequel le rouleau d'encollage (101, 201, 301, 401, 501, 601) présente au moins un segment de contact (380; 480a, 480b; 580; 680) correspondant à ladite une zone partielle ou aux plusieurs zones partielles dans la direction axiale, et qui est configuré de manière telle, que lors du contact avec l'unité d'application de colle (172, 272, 372, 472, 572), il absorbe de la colle dans un ou plusieurs creux en retrait radial par rapport à la surface périphérique du rouleau d'encollage.

3. Dispositif d'étiquetage selon la revendication 2, dans lequel ledit au moins un segment de contact (380; 480a, 480b; 580; 680) s'étend seulement sur une partie de la circonférence de la surface périphérique du rouleau d'encollage (101, 201, 301, 401, 501, 601).

4. Dispositif d'étiquetage selon la revendication 2 ou la revendication 3, dans lequel la surface (301a) du rouleau d'encollage (101, 201, 301, 401, 501, 601) est de configuration lisse en-dehors dudit au moins un segment de contact (380; 480a, 480b; 580; 680).

5. Dispositif d'étiquetage selon l'une des revendications 2 à 4, dans lequel le ou les plusieurs creux sont réalisés en tant que creux gravés ou fraisés dans la surface, en tant qu'espaces intermédiaires d'une structure de la surface, sous la forme d'une grille, d'une tôle perforée ou d'un tissu, ou bien d'une combinaison de ceux-ci.

6. Dispositif d'étiquetage selon l'une des revendications 2 à 5, dans lequel le rouleau d'encollage (601) comprend un rouleau de base (687), qui est réalisé de manière telle, qu'au moins un élément de surface (685) du rouleau d'encollage (601) puisse être fixé de manière interchangeable sur le rouleau de base (687), ledit au moins un élément de surface (685) étant notamment configuré de manière à présenter au moins un segment de contact (680).

7. Dispositif d'étiquetage selon l'une des revendications précédentes, dans lequel l'unité d'application de colle (472) présente deux ou davantage de chambres d'accueil (474a, 474b) séparées spatialement dans la direction axiale du rouleau d'encollage (401).

8. Dispositif d'étiquetage selon l'une des revendications précédentes, dans lequel le coulisseau (590) présente deux ou davantage de segments (590a, 590b) pouvant être commandés individuellement, qui sont associés à des zones différentes de la chambre d'accueil (374a, 374b) dans la direction axiale du rouleau d'encollage (301, 501).

9. Dispositif d'étiquetage selon la revendication 8, dans lequel les zones différentes de la chambre d'accueil (374a, 374b) sont séparées les unes des autres par un ou plusieurs éléments de séparation (392).

10. Dispositif d'étiquetage selon l'une des revendications précédentes, dans lequel l'unité d'application de colle présente au moins un premier élément de paroi (376a; 576a) et un deuxième élément de paroi (376b; 576b), et dans lequel le premier et le deuxième élément de paroi délimitent la chambre d'accueil (374a, 374b; 574) des deux côtés dans la direction périphérique du rouleau d'encollage (301; 501) .

11. Dispositif d'étiquetage selon la revendication 10, dans lequel le premier et/ou le deuxième élément de paroi (376a, 376b; 576a, 576b) sont en contact avec le rouleau d'encollage (301; 501), en fonctionnement, et sont notamment pressés de manière élastique contre la surface du rouleau d'encollage (301; 501).

12. Dispositif d'étiquetage selon l'une des revendications précédentes, comprenant, en outre, au moins un dispositif d'étanchéité (375a, 375b; 575a, 575b), qui rend étanche la chambre d'accueil (374a, 374b; 574) sur au moins un côté situé dans la direction axiale du rouleau d'encollage (301; 501), notamment le côté situé dans la direction de la gravité.

13. Dispositif d'étiquetage selon l'une des revendications précédentes, dans lequel l'unité d'application de colle (372) est montée pivotante sur un support (342).

14. Dispositif d'étiquetage selon l'une des revendications précédentes, dans lequel le rouleau d'encollage (101, 201, 301, 401, 501, 601) et/ou l'unité d'application de colle (172, 272, 372, 472, 572) sont réalisés de manière à être déplaçables dans la direction axiale du rouleau d'encollage.
